# FASCICULE DE BREVET EUROPEEN

(11) **EP 1 905 528 B1**
(45) Date de publication et mention de la délivrance du brevet: **23.02.2011**
(21) Numéro de dépôt: 07301339.3
(22) Date de dépôt: 06.09.2007
(51) Int. Cl.: B23K 9/167, B23K 9/29, B23K 9/32

(54) **Procédé automatique de détection de l'usure d'une électrode de soudage par mesure ou comptabilisation, pendant le soudage, du nombre d'amorçages effectués par l'électrode**
Verfahren zur automatischen Erkennung der Abnutzung einer Schweißelektrode durch Bemessung oder Abzählen während des Schweissens der Zahl der Lichtbogenzündungen dieser Elektrode.
Method of automatically detecting wear of a welding electrode by measuring or counting during welding of number of starting arcs of this electrode

(30) Priorité: 25.09.2006 FR 0653919
(43) Date de publication de la demande: 02.04.2008
(73) Titulaire: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Opderbecke, Thomas, 95310, SAINT OUEN L'AUMONE (FR); Gadrey, Sébastien, 58230, GOULOUX (FR)
(74) Mandataire: Pittis, Olivier

(56) Documents cités:
- EP-A1- 1 283 088
- FR-A- 2 649 278
- JP-A- 7 227 671
- JP-A- 9 216 059
- JP-A- 2002 307 170

## Description

L'invention porte sur un procédé automatisé de détection de l'usure d'une électrode non fusible d'une torche de soudage à l'arc et de remplacement automatique de ladite électrode lorsqu'elle est érodée par une électrode neuve, ainsi que sur une installation de mise en oeuvre dudit procédé.

En soudage à l'arc TIG, le remplacement de l'électrode infusible en tungstène est effectué régulièrement par une électrode neuve ou réaffûtée car celle ci peut, si elle est détériorée, perturber l'amorçage ou encore la soudure.

En soudage manuel, le remplacement de l'électrode est effectué par l'opérateur lorsque celui-ci se rend compte qu'elle ne fonctionne plus correctement ou qu'il constate visuellement que celle-ci est détériorée.

Robotiser ou automatiser le procédé de soudage TIG implique une anticipation et une automatisation du changement de l'électrode en tungstène pour assurer un fonctionnement fiable. Ce changement doit se faire sans intervention manuelle et le plus rapidement possible pour ne pas nuire à la productivité du procédé, en particulier lorsqu'il est intégré à une chaîne de production.

De préférence, ces interventions visant au remplacement de l'électrode doivent se faire en temps masqué, c'est-à-dire avantageusement pendant des temps d'arrêt du robot.

Dans tous les cas, il est primordial au plan industriel de pouvoir éviter la réalisation de soudures de mauvaise qualité résultant de l'utilisation d'une électrode dégradée.

Partant de là, on peut opérer un changement de l'électrode de manière préventive, c'est-à-dire après un temps d'utilisation donné ou un nombre d'amorçage prévu.

Cependant, un tel changement préventif d'électrode, c'est-à-dire avant d'atteindre sa limite d'utilisation, a le désavantage d'une utilisation inefficace des électrodes puisque certaines seront remplacées prématurément ce qui peut donc engendrer des coûts supplémentaires.

De plus, il n'est pas toujours possible ou aisé de définir avec précision une duré de vie maximale d'électrode, ce qui implique que la durée avant changement doit être définie avec une grande marge, donc accentue le risque de remplacement trop précoce susmentionné.

A l'inverse, le changement de l'électrode peut être opérer au moment de la défaillance de l'électrode, c'est-à-dire après constatation d'une mauvaise soudure ou d'un problème d'amorçage par exemple.

Toutefois, ceci a le désavantage d'engendrer des pièces défectueuses, de provoquer un temps d'arrêt de la machine et rend obligatoire la présence constante d'un opérateur à proximité qui doit immédiatement intervenir en cas d'incident, ce qui nuit à la productivité du procédé.

En soudage par résistance, un système est connu pour la détection de l'usure de l'électrode, lequel est basé sur une mesure de la résistance de contact de celle ci et le démarrage d'un cycle de changement lorsque cette résistance devient incompatible avec un soudage efficace. Cependant, un tel système n'est pas adapté au procédé TIG.

Par ailleurs, le document JP-A-63040683 décrit un système de détection de l'usure d'une électrode pour procédé de soudage par résistance, qui prévoit un changement de l'électrode après un nombre de pièces soudées défini. Comme susmentionné, on se heurte à des risques de remplacement prématuré de l'électrode.

En outre, le document JP-A-09216059, qui est considéré comme représentant l'état de la technique le plus proche, enseigne un procédé de détection de l'usure d'une électrode de soudage utilisant un senseur tactile, et une installation automatisée ou robotisée de soudage à l'arc.

Enfin, le document FR-A-2649278 propose, quant à lui, un procédé de détection de l'usure d'une électrode utilisée en coupage thermique, qui est basé sur une mesure de la fréquence acoustique émise par un plasmatron. Ce procédé est jugé plus efficace qu'un procédé de détection reposant sur un comptage du nombre d'allumages de l'arc et un remplacement de l'électrode lorsqu'un nombre d'amorçages préfixé est atteint.

Le problème à résoudre est dès lors de proposer un procédé de détection d'usure d'électrode amélioré, lequel puisse être entièrement automatisé, c'est-à-dire ne nécessitent pas l'intervention d'un opérateur pour décider du moment pour remplacer l'électrode.

De plus, ce procédé doit permettre d'éviter ou de minimiser les changements prématurés ou, à l'inverse, trop tardifs de l'électrode d'une torche à électrode non fusible montée sur un robot ou une machine de soudage automatique.

Une solution de l'invention est alors un procédé automatisé de détection de l'usure d'une électrode non fusible d'une torche de soudage à l'arc et de remplacement ou réusinage automatique de ladite électrode lorsqu'elle est érodée par une électrode neuve tel que défini dans la revendication 1.

On appelle indifféremment :
- « valeur de référence », une valeur exacte ou alors une valeur moyenne, correspondant par exemple à une valeur mesurée à un instant donné ou moyenné sur un temps donné ou encore, une plage de valeurs.
- « électrode neuve », une électrode qui est totalement neuve et n'a donc jamais été utilisée ou alors une électrode qui a été réaffûtée ou réparée, après un ou plusieurs usages préalables.

Selon le cas, le procédé de l'invention peut comprendre l'une ou plusieurs des caractéristiques suivantes :
- à l'étape a), on détermine et compare plusieurs desdits paramètres et on remplace l'électrode lorsque plusieurs desdits paramètres excèdent leurs valeurs de référence respectives préfixées.
- à l'étape a), on détermine, en outre, l'intensité et/ou la tension électrique engendrée par ladite électrode pendant une durée donnée de soudage.
- à l'étape b), on compare les variations d'intensité et/ou la tension mesurées avec des valeurs-seuils de variation d'intensité et/ou de tension préfixées.
- on procède au remplacement suivant l'étape c) lorsque : la valeur d'au moins un des paramètres indicateurs d'usure est supérieur ou égal à la valeur de référence préfixée ou au moins une des valeurs de tension et/ou d'intensité excède l'une des valeurs-seuils de tension et/ou d'intensité, préfixées.
- le nombre d'amorçage maximum est fixé à 10 000 amorçages, de préférence à 1000, de préférence encore à 200 amorçages.
- le temps d'amorçage maximum est de 5 secondes, de préférence 0.1 secondes.
- le temps d'arc maximum est de 24 heures, de préférence de 15 min.
- la différence entre la valeur-seuil de variation de tension et la variation de tension mesurée pendant 0.1 seconde est d'au moins 3 V, de préférence d'au moins 1V et/ou la différence entre la valeur-seuil de variation d'intensité et la valeur de variation d'intensité mesurée pendant 0.1 seconde est d'au moins 25 A, de préférence au moins 5 A.
- le nombre d'amorçages effectués par l'électrode et le temps d'arc de l'électrode sont comptabilisés en permanence et sont mémorisés.
- il est mis en oeuvre automatiquement par un robot de soudage ou un automate programmable.
- à l'étape c), le remplacement de l'électrode érodée par une électrode neuve est opéré automatiquement par un dispositif changeur d'électrode automatisé.
- il comporte l'étape de communiquer les informations d'état d'électrode par le biais d'un afficheur ou lien informatique à un opérateur ou système de contrôle de production.

L'invention concerne aussi une installation automatisée ou robotisée de soudage à l'arc telle que définie dans la revendication 12.

Selon le cas, l'installation de l'invention peut comprendre l'une ou plusieurs des caractéristiques suivantes :
- les moyens de mesure sont des capteurs de tension et d'intensité, par exemple sonde à effet Hall et voltmètre ou tout autre capteur permettant de réaliser la même fonction.
- les moyens de mémorisation sont propres à l'automate et/ou du robot, par exemple carte mémoire, compteur incrémental ou tout autre élément permettant de réaliser la même fonction.
- les moyens de traitement d'informations sont des programmes propres à l'automate et/ou du robot.
- les moyens de remplacement d'électrode comprennent un dispositif changeur d'électrode automatisé apte à venir se saisir de l'électrode érodée au sein de la torche et à la remplacer par une électrode neuve.

Selon le procédé de l'invention, on opère donc une surveillance du nombre d'amorçages effectués par l'électrode considérée depuis qu'elle a été insérée dans la torche TIG, c'est-à-dire depuis sa première utilisation, d'au moins un des paramètres indicateurs de l'état d'usure de l'électrode, à savoir :
-
- le temps d'arc de ladite électrode, c'est-à-dire la durée totale pendant laquelle un arc électrique a été généré par l'électrode,
- le temps d'amorçage, c'est-à-dire le temps nécessaire à l'établissement d'un arc électrique lors de l'amorçage.

En effet, le suivi du nombre d'amorçage et d'au moins un, mais de préférence de plusieurs de ces paramètres simultanément, permet de détecter de manière fiable toute usure de l'électrode.

### Temps d'amorçage

Le temps d'amorçage peut être surveillé par le générateur de courant ou par le robot ou encore un équipement auxiliaire. Un temps d'amorçage élevé est un résultat direct d'une géométrie et/ou composition de l'électrode dégradée réduisant son émissivité et donc rendant le claquage et l'établissement de l'arc plus difficile.

Le temps d'amorçage d'une électrode neuve est de 0.1 secondes environ. De là, des temps d'amorçage plus élevés (de l'ordre de plusieurs secondes) sont généralement le résultat d'une usure plus ou moins importante de l'électrode.

Ceci peut être observé puis mesuré pour en déduire une information d'usure de l'électrode. Le seuil d'un temps maximal d'amorçage doit être choisi proche de la fin de vie de l'électrode mais d'une manière à pouvoir effectuer encore la soudure en cours.

### Temps d'arc

La majorité des générateurs de soudage ou robots de soudage permettent aujourd'hui de comptabiliser le temps d'arc d'une électrode. Ce paramètre peut dès lors être exploité pour opérer un changement régulier de l'électrode sans intervention d'un opérateur.

Pour décider du temps d'arc maximal admissible avant tout changement d'électrode, on peut par exemple procéder empiriquement en réalisant des essais de soudage avec une série de plusieurs électrodes, dans les conditions habituelles de leur utilisation, et en comptabilisant les temps d'arc obtenus pour chacune d'elles. Ce qui permet d'obtenir un temps d'arc maximal qui pourra servir de temps de référence. Néanmoins, il n'est pas souhaitable d'utiliser uniquement ce paramètre, car il ne peut pas toujours à lui seul éviter un changement prématuré d'électrode.

### Nombre d'amorçages, conformément à l'invention

Comme écrit dans le paragraphe précédent, la majorité des générateurs ou robots de soudage permettent de comptabiliser le nombre d'amorçages effectués par une électrode. Déterminer le nombre d'amorçages maximum peut être réalisé empiriquement pour une application de soudure donnée. De même que pour le temps d'arc, il n'est pas souhaitable d'utiliser uniquement ce paramètre, bien qu'il constitue un paramètre simple à suivre, donc à privilégier. Il est d'ailleurs, le paramètre principal suivi dans le cadre de la présente invention. Préférentiellement, on suivra donc toujours le nombre d'amorçages et éventuellement le temps d'amorçage et/ou le temps d'arc.

Dans des cas spécifiques, les résultats donnés dans le Tableau suivant ont été trouvés empiriquement pour la duré de vie d'une électrode neuve avant défaillance.

**Tableau**

| Application | Nombre d'amorçages | Temps de soudure |
|---|---|---|
| Acier galvanisé à la trempe, Ep. : 1.5 mm, lignes de fusion avec fil CuSi3 gaz ARCAL 10 (Ar, H2) (L=1 m, Vs=1m/min) | 240 | 240 min |
| Acier galvanisé à trempe. Assemblages à clin Ep. : 0.8mm Fil CuSi3 gaz ARCAL 10 (Ar, H2) (L=50 mm, Vs=0.8m/min) | 255 | 15 min |
| Acier au carbone Ep. : 2mm (L=50 cm, Vs=1m/min) | 1000 | 500 min |
| Aluminium Ep. : 1.5mm Fil AISi gaz ARCAL 1 (Argon) (L=50 mm, Vs=0.25m/min) | 320 | 60 min |

La gamme de gaz ARCAL™ est disponible auprès de la société L'AIR LIQUIDE.

Ep désigne l'épaisseur du matériau assemblé; L désigne la longueur du cordon assemblé; et Vs désigne la vitesse de soudage.

Outre le nombre d'amorçage et au moins l'un des deux autres paramètres principaux susmentionnés, d'autres paramètres peuvent également être pris en compte pour détecter l'usure d'une électrode ou pour augmenter la précision de cette détection, en diminuant les risques de remplacement prématurés. On peut citer à ce titre, le suivi de la tension (U) et de l'intensité (I).

En effet, en pratique des instabilités d'arc provoquées par une usure de l'électrode se manifestent par des variations de longueur de l'arc, et donc des variations rapides de tension. Dans le cas de générateurs modernes l'intensité est régulée d'une manière constante, mais dans le cas des générateurs anciens à caractéristique plongeante le phénomène provoquera également une instabilité d'intensité. Ces variations peuvent être mesurées, au moyen d'un capteur et d'une électronique de mesure adaptée. Ces donnés peuvent être traités par filtrage puis calcul, pour obtenir des informations sur l'amplitude de variation, sa fréquence ou d'autres paramètres résultants. On notera que pour ce cas spécifique, les mesures des variations doivent être limitées dans le temps. En effet, elles doivent être effectuées dans un laps de temps assez court, pour éviter toutes les variations induites par : les déformations de la pièce soudée, la géométrie de la pièce soudée et les mouvements du bain de soudage. Ceci implique donc une mesure réalisée par exemple pendant 0.1 secondes. Comme susmentionné, les variations de tensions et d'intensités maximales admissibles peuvent être déterminées empiriquement.

L'invention grâce aux explications données ci-après, va être mieux comprise grâce aux Figures illustratives suivantes :

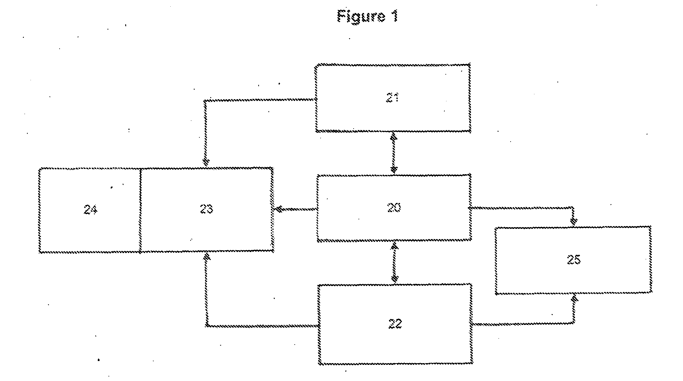

- La Figure 1 est un diagramme de principe d'un cycle de soudage avec détection de l'usure de l'électrode selon l'invention;
- La Figure 2 est un schéma de tension et d'intensité de soudage TIG mesurant les variations des signaux d'une électrode en bon état;
- La Figure 3 est un schéma de tension et d'intensité de soudage TIG mesurant le temps d'amorçage en fonction des seuils d'intensité et de tension;
- La Figure 4 est un schéma d'architecture d'une installation de soudage TIG avec changeur d'électrode intégrant le procédé de l'invention.

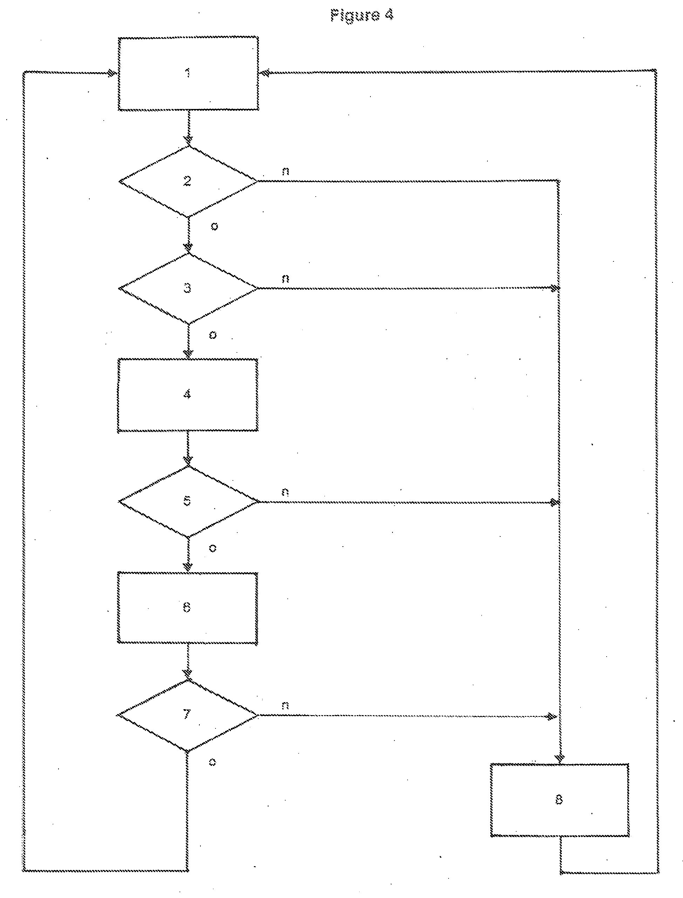

La gestion du cycle de soudage avec détection de l'usure de l'électrode et de son remplacement éventuel peut être fait, par exemple, selon le diagramme de principe représenté en Figure 4.

Un cycle de soudage à l'arc TIG met habituellement en oeuvre une succession d'opérations : amorçage de l'arc, soudage proprement dit et extinction de l'arc. Ce cycle étant réalisé avec une torche de soudage à l'arc munie d'une électrode non fusible en tungstène.

Selon le procédé de l'invention schématisé en Figure 4, juste avant de commencer un nouveau cycle de soudage (en 1) ou après avoir effectué une opération de soudage, on procède à une vérification des paramètres d'usure de l'électrode de manière à déterminer si l'électrode doit être changée (o) ou non (n).

Pour ce faire, le nombre d'amorçages effectués avec l'électrode considérée, durant les cycles de soudage précédents, est mesuré puis comparé (en 2) à une valeur maximale de référence de nombre d'amorçages, par exemple 1000 amorçages sur acier.

Il est particulièrement intéressant et avantageux selon l'invention, de mesurer le nombre d'amorçages effectués avec l'électrode considérée car c'est un paramètre relativement facile à suivre et à mesurer. Le nombre d'amorçages constitue un paramètre de suivi essentiel du procédé de l'invention.

Sinon, on compare alors (en 3) le temps d'arc mesuré, pendant les cycles de soudage précédents, avec une valeur maximale de référence de temps d'arc, par exemple 4 heures.

Si ni le nombre d'amorçages, ni le temps d'arc n'excèdent leurs valeurs maximales admissibles fixées, alors on peut procéder (en 4) à un nouvel amorçage. En parallèle, on mesure le temps d'amorçage nécessaire à la réalisation dudit amorçage et on le compare (en 5), à une valeur de référence.

Sinon, on réalise normalement une soudure de la ou des pièces à souder (en 6) en mesurant, pendant la soudure, la tension U et l'intensité I du courant de soudage.

Une fois la soudure effectuée, on recherche (en 7) si des variations de tension et /ou de courant ont eu lieu pendant le soudage au-delà de limites fixées. Si tel est le cas, on peut remplacer là encore l'électrode (en 8).

En l'absence de telles variations et de dépassement de valeur maximal admissible, on recommence un nouveau cycle de soudage (en 1) car l'électrode est jugée encore utilisable et n'a pas besoin d'être remplacée ou réaffûtée.

Bien entendu, le diagramme de la Figure 4 n'est qu'illustratif et nullement limitatif. D'ailleurs, il pourrait ne comprendre que certaines des étapes qui y sont représentées ou encore inclure des étapes additionnelles de vérification de l'état d'usure de l'électrode qui n'y sont pas montrées.

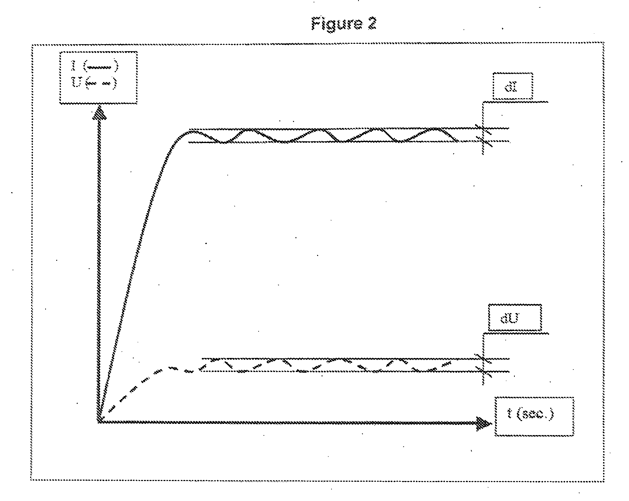

La Figure 2 est un exemple de graphe typique de l'intensité ( I ) du courant et de la tension (U) d'arc (en ordonnées), pendant une opération de soudage à l'arc TIG, faisant apparaître les variations (d1) de l'intensité (I) du courant de soudage en fonction du temps (t) de soudage (en abscisses).

Dans l'exemple représenté en Figure 2 la valeur « dI » indique la variation d'intensité pour un courant lisse, et la valeur « dU » indique la variation de tension en régime établi, c'est à dire après amorçage et stabilisation de l'arc. Ces variations sont mesurées et calculées par exemple à partir des valeurs minimales et maximales d'intensité, ainsi que de tension dans la séquence observée.

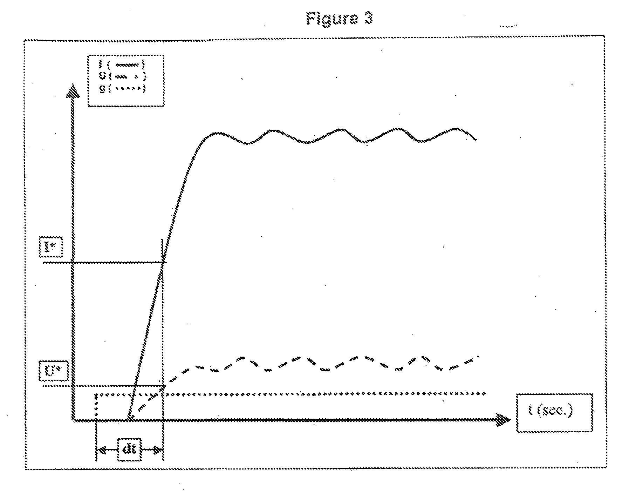

La Figure 3 est un exemple de graphe typique de l'intensité ( I ) du courant et de la tension (U) d'arc (en ordonnées), pendant une opération de soudage à l'arc TIG, faisant apparaître les seuils d'intensité (I*) et de tension (U*) en fonction du temps (t) de soudage (en abscisses), ainsi que le temps d'amorçage (dt).

Dans l'exemple représenté en Figure 3, le temps indiqué « dt » est le temps d'amorçage entre la commande (gâchette g) qui est donné au générateur de soudage et l'établissement du courant de soudage ( signal relais intensité). La valeur « I » indique l'intensité de régime établie, et la valeur « U» indique la tension en régime établie, c'est à dire après amorçage et stabilisation de l'arc. Ces niveaux sont mesurés, calculés et comparés par exemple à des valeurs seuil, qui peuvent être par exemple de 10 volts pour (U*) et 50 ampères pour (I*).

L'invention porte sur la détection automatisée de l'instant où doit avoir lieu le remplacement d'une électrode érodée par une électrode neuve. En particulier de l'électrode en tungstène de la torche de soudage TIG décrite dans le document EP-A-1459831, de manière à permettre l'action d'un dispositif automatique de changement d'électrode ou changeur d'électrode.

Comme schématisé en Figure 4, le dispositif et/ou le procédé de détection peuvent être contrôlés par un robot 21 équipé de la torche TIG ou par un automate programmable 23 propre au changeur 24 d'électrode, ce qui peut présenter l'avantage d'un système complètement autonome et indépendant du type de robot.

La mesure de U et I peut être faite directement dans le générateur de courant 20 de soudage ou dans équipement auxiliaire 25, alors que le comptage du nombre d'amorçage et celui du temps d'amorçage et/ou du temps d'arc peuvent se faire au niveau du robot 21.

Le reste du système de soudage 22 comprend la torche, le faisceau et le dévidoir. Un système d'imagerie, par exemple un appareil photo numérique ou une caméra ou tout autre système analogue de traitement d'image peut être ajouté pour connaître la géométrie et donc l'état d'usure de l'électrode. A cette fin, on peut également intégrer une caméra dans le changeur présenté ci-dessous.

Le changeur 24 d'électrode est piloté par un automate programmable 23 intégrant un cycle de changement d'électrode « intelligent » basé sur une surveillance automatique de un ou plusieurs paramètres représentatifs de l'état réel d'usure de l'électrode à un instant donné, comme expliqué ci-avant,

Il est à noter qu'il existe d'autres paramètres secondaires pouvant être suivis et utilisés pour détecter l'usure de l'électrode, en association avec les paramètres ci-dessus, à savoir notamment la rupture de l'arc éventuelle, par mesure du courant du générateur ; l'irrégularité du résultat de soudage détecté par exemple par un système de vision caméra ; et l'analyse d'un signal acoustique du bruit de l'arc.

## Revendications

1. Procédé automatisé de détection de l'usure d'une électrode non fusible d'une torche de soudage à l'arc et de remplacement ou réusinage automatique de ladite électrode lorsqu'elle est érodée par une électrode neuve, dans lequel on procède selon les étapes suivantes :
a) mesurer ou comptabiliser, pendant le soudage, le nombre d'amorçages effectués par l'électrode considérée et au moins un paramètre indicateur d'usure choisi parmi le temps d'arc de ladite électrode et le temps d'amorçage pour l'établissement de l'arc,
b) comparer la valeur d'au moins un des paramètres indicateurs d'usure déterminé à l'étape a) avec au moins une valeur de référence respective préfixée,
c) procéder à un remplacement de l'électrode érodée par une électrode neuve ou réaffûtée lorsque la valeur d'au moins un des paramètres indicateurs d'usure est supérieure ou égale à au moins ladite valeur de référence respective préfixée.

2. Procédé selon la revendication 1, **caractérisé en ce qu'**à l'étape a), on détermine et compare plusieurs desdits paramètres indicateurs et on remplace l'électrode lorsque plusieurs desdits paramètres indicateurs excèdent leurs valeurs de référence respectives préfixées.

3. Procédé selon l'une des revendications 1 ou 2, **caractérisé en ce que** :
- à l'étape a), on déterminé, en outre, l'intensité et/ou la tension électrique engendrée par ladite électrode pendant une durée donnée de soudage, et
- à l'étape b), on compare les variations d'intensité et/ou la tension mesurées avec des valeurs-seuils de variation d'intensité et/ou de tension préfixées,
- on procède au remplacement suivant l'étape c) lorsque :
. la valeur d'au moins un des paramètres indicateurs d'usure est supérieur ou égal à la valeur de référence préfixée, ou
. au moins une des valeurs de tension et/ou d'intensité excède l'une des valeurs-seuils de tension et/ou d'intensité, préfixées.

4. Procédé selon l'une des revendications 1 à 3, **caractérisé en ce que** le nombre d'amorçage maximum est fixé à 10000 amorçages, de préférence à 200 amorçages.

5. Procédé selon l'une des revendications 1 à 3, **caractérisé en ce que** le temps d'amorçage maximum est de 5 secondes, de préférence 0.1 secondes.

6. Procédé selon l'une des revendications 1 à 3, **caractérisé en ce que** le temps d'arc maximum est de 24 heures, de préférence 15 min.

7. Procédé selon l'une des revendications 1 à 6, **caractérisé en ce que** la différence entre la valeur-seuil de variation de tension et la variation de tension mesurée pendant 0.1 seconde est d'au moins 3V, de préférence d'au moins IV et/ou la différence entre la valeur-seuil de variation d'intensité et la valeur de variation d'intensité mesurée pendant 0.1 seconde est d'au moins 25 A, de préférence au moins 5 A.

8. Procédé selon l'une des revendications 1 à 7, **caractérisé en ce que** le nombre d'amorçages effectués par l'électrode et le temps d'arc de l'électrode sont comptabilisés en permanence et sont mémorisés.

9. Procédé selon l'une des revendications 1 à 8, **caractérisé en ce qu'**il est mis en oeuvre automatiquement par un robot de soudage ou un automate programmable.

10. Procédé selon l'une des revendications 1 à 9, **caractérisé en ce qu'**à l'étape c), le remplacement de l'électrode érodée par une électrode neuve est opéré automatiquement par un dispositif changeur d'électrode automatisé.

11. Procédé selon l'une des revendications 1 à 10, **caractérisé en ce qu'**il comporte l'étape de communiquer les informations d'état d'électrode par le biais d'un afficheur ou lien informatique à un opérateur ou système de contrôle de production.

12. Installation automatisée ou robotisée de soudage à l'arc comprenant :
- une torche de soudage avec électrode non-fusible portée par un bras robotisé ou par un bâti-support,
- des moyens de mesure pour déterminer le nombre d'amorçages effectués par l'électrode considérée et au moins un paramètre indicateur d'usure choisi parmi i) le temps d'arc de ladite électrode et ii) le temps d'amorçage,
- des moyens de mémorisation permettant de mémoriser au moins une valeur de référence préfixée correspondant à un nombre d'amorçages maximum, un temps d'arc maximum et un temps d'amorçage maximum,
- des moyens de traitement d'informations coopérant avec les moyens de mesure et les moyens de mémorisation, pour comparer la valeur d'au moins un des paramètres indicateurs d'usure déterminés par les moyens de mesure, avec au moins une valeur de référence préfixée retenue par les moyens de mémorisation, et
- des moyens de remplacement d'électrode aptes à procéder à un remplacement automatique de l'électrode érodée par une électrode neuve lorsque les moyens de traitement déterminent que la valeur d'au moins un des paramètres indicateurs d'usure est supérieur ou égal à au moins ladite valeur de référence préfixée.

## Claims

1. Automated method for detecting the wear of a non-consumable electrode of an arc welding torch and for automatically replacing or remachining said electrode when it is eroded with a fresh electrode, in which method the following steps are carried out:
a) the number of strikes performed by the electrode in question, and at least one wear-indicating parameter chosen from the arc time of said electrode and the strike time for establishing the arc, is measured or counted during welding ;
b) the value of at least one of the wear-indicating parameters determined in step a) is compared with at least one preset respective reference value ; and
c) the eroded electrode is replaced with a fresh or sharpened electrode when the value of at least one of the wear-indicating parameters is equal to or exceeds at least said preset respective reference value.

2. Method according to Claim 1, **characterized in that** several of said indicating parameters are determined and compared in step a) and the electrode is replaced when several of said indicating parameters exceed their preset respective reference values.

3. Method according to either of Claims 1 and 2, **characterized in that** :
- in step a), the electrical current and/or voltage generated by said electrode over a given welding time is also determined ;
- in step b), the measured current and/or voltage variations are compared with preset current and/or voltage variation threshold values ; and
- in step c) the electrode is replaced when :
. the value of at least one of the wear-indicating parameters is equal to or exceeds the preset reference value or
. at least one of the voltage and/or current values exceeds one of the preset voltage and/or current threshold values.

4. Method according to one of Claims 1 to 3, **characterized in that** the maximum number of strikes is set at 10 000 strikes, preferably 200 strikes.

5. Method according to one of Claims 1 to 3, **characterized in that** the maximum strike time is 5 seconds, preferably 0.1 seconds.

6. Method according to one of Claims 1 to 3, **characterized in that** the maximum arc time is 24 hours, preferably 15 min.

7. Method according to one of Claims 1 to 6, **characterized in that** the difference between the voltage variation threshold value and the voltage variation measured over 0.1 seconds is at least 3 V, preferably at least 1 V, and/or the difference between the current variation threshold value and the current variation value measured over 0.1 seconds is at least 25 A, preferably at least 5 A.

8. Method according to one of Claims 1 to 7, **characterized in that** the number of strikes performed by the electrode and the arc time of the electrode are permanently counted and are stored in memory.

9. Method according to one of Claims 1 to 8, **characterized in that** it is carried out automatically by a welding robot or a programmable controller.

10. Method according to one of Claims 1 to 9, **characterized in that** replacement of the eroded electrode with a fresh electrode in step c) is carried out automatically by an automated electrode changer.

11. Method according to one of Claims 1 to 10, **characterized in that** it includes the step of communicating the information about the state of the electrode by means of a display or a computer link to a production control operator or system.

12. Automated or robotic arc welding installation comprising :
- a welding torch with a non-consumable electrode carried by a robotic arm or by a support frame ;
- measurement means for determining the number of strikes performed by the electrode in question and at least one wear-indicating parameter chosen from i) the arc time of said electrode ; and ii) the strike time ;
- storage means for storing in memory at least one preset reference value corresponding to a maximum number of strikes, a maximum arc time and a maximum strike time ;
- data processing means co-operating with the measurement means and the storage means, in order to compare the value of at least one of the wear-indicating parameters determined by the measurement means with at least one preset reference value held by the storage means ; and
- electrode replacement means capable of automatically replacing the eroded electrode with a fresh electrode when the processing means determine that the value of at least one of the wear-indicating parameters is equal to or exceeds at least said preset reference value.

## Patentansprüche

1. Automatisiertes Verfahren zum Detektieren des Verschleißes einer nicht schmelzbaren Elektrode eines Lichtbogenschweißbrenners und für die automatische Ersetzung durch eine neue Elektrode oder Nachbearbeitung der Elektrode, wenn sie erodiert ist, wobei gemäß den folgenden Schritten vorgegangen wird:
a) Messen oder Hochrechnen während des Schweißens der Anzahl von Zündungen, die von der betrachteten Elektrode ausgeführt werden, und wenigstens eines Verschleißangabeparameters, der aus der Lichtbogendauer der Elektrode und der Zündungsdauer für die Herstellung des Lichtbogens gewählt wird,
b) Vergleichen des Wertes wenigstens eines der Verschleißangabeparameter, die im Schritt a) bestimmt werden, mit einem im Voraus festgelegten entsprechenden Referenzwert,
c) Vornehmen eines Austausches der erodierten Elektrode durch eine neue oder nachbearbeitete Elektrode, wenn der Wert wenigstens eines der Verschleißangabeparameter größer oder gleich wenigstens dem im Voraus festgelegten entsprechenden Referenzwert ist.

2. Verfahren nach Anspruch 1, **dadurch gekennzeichnet, dass** im Schritt a) mehrere der Angabeparameter bestimmt und verglichen werden und die Elektrode ausgetauscht wird, wenn mehrere der Angabeparameter ihre jeweiligen im Voraus festgelegten Referenzwerte übersteigen.

3. Verfahren nach einem der Ansprüche 1 oder 2, **dadurch gekennzeichnet, dass**:
- im Schritt a) außerdem die Intensität und/oder die elektrische Spannung, die von der Elektrode während einer gegebenen Schweißdauer erzeugt wird, bestimmt werden und
- im Schritt b) die Veränderungen der Intensität und/oder der Spannung, die gemessen werden, mit Schwellenwerten für die Veränderung der Intensität und/oder der Spannung, die im Voraus festgelegt werden, verglichen werden,
- der Austausch gemäß Schritt c) vorgenommen wird, wenn:
der Wert wenigstens eines der Verschleißangabeparameter größer oder gleich dem im Voraus festgelegten Referenzwert ist oder
wenigstens einer der Spannungs- und/oder Intensitätswerte einen der Spannungs- und/oder Intensitätsschwellenwerte, die im Voraus festgelegt werden, übersteigt.

4. Verfahren nach einem der Ansprüche 1 bis 3, **dadurch gekennzeichnet, dass** die maximale Zündungsanzahl auf 10000, vorzugsweise auf 200 Zündungen, festgelegt ist.

5. Verfahren nach einem der Ansprüche 1 bis 3, **dadurch gekennzeichnet, dass** die maximale Zündungszeit 5 Sekunden, vorzugsweise 0,1 Sekunden, beträgt.

6. Verfahren nach einem der Ansprüche 1 bis 3, **dadurch gekennzeichnet, dass** die maximale Lichtbogenzeit 24 Stunden, vorzugsweise 15 Minuten, beträgt.

7. Verfahren nach einem der Ansprüche 1 bis 6, **dadurch gekennzeichnet, dass** die Differenz zwischen dem Schwellenwert der Spannungsveränderung und der gemessenen Spannungsveränderung während 0,1 Sekunden wenigstens 3 V, vorzugsweise wenigstens 1 V, beträgt und/oder die Differenz zwischen dem Schwellenwert der Intensitätsveränderung und dem gemessenen Intensitätsveränderungswert während 0,1 Sekunden wenigstens 25 A, vorzugsweise wenigstens 5 A, beträgt.

8. Verfahren nach einem der Ansprüche 1 bis 7, **dadurch gekennzeichnet, dass** die Anzahl von Zündungen, die von der Elektrode ausgeführt werden, und die Lichtbogenzeit der Elektrode ständig hochgerechnet und gespeichert werden.

9. Verfahren nach einem der Ansprüche 1 bis 8, **dadurch gekennzeichnet, dass** es durch einen Schweißroboter oder einen programmierbaren Automaten automatisch ausgeführt wird.

10. Verfahren nach einem der Ansprüche 1 bis 9, **dadurch gekennzeichnet, dass** im Schritt c) der Austausch der erodierten Elektrode durch eine neue Elektrode automatisch durch eine automatisierte Elektrodenaustauschvorrichtung bewerkstelligt wird.

11. Verfahren nach einem der Ansprüche 1 bis 10, **dadurch gekennzeichnet, dass** es den Schritt des Kommunizierens der Informationen über den Zustand der Elektrode über eine Anzeigeeinrichtung oder ein Datenverarbeitungsglied für einen Bediener oder ein Produktionssteuersystem enthält.

12. Automatisierte oder robotisierte Lichtbogenschweißanlage, die enthält:
- einen Schweißbrenner mit einer nicht schmelzbaren Elektrode, die von einem robotisierten Arm oder von einem Tragrahmen getragen wird,
- Messmittel, um die Anzahl von Zündungen, die von der betrachteten Elektrode ausgeführt werden, und wenigstens einen Verschleißangabeparameter, der aus i) der Lichtbogenzeit der Elektrode und ii) der Zündungszeit gewählt ist, zu bestimmen,
- Speichermittel, die ermöglichen, wenigstens einen im Voraus festgelegten Referenzwert, der einer maximalen Anzahl von Zündungen, einer maximalen Lichtbogenzeit und einer maximalen Zündungszeit entspricht, zu speichern,
- Datenverarbeitungsmittel, die mit den Messmitteln und mit den Speichermitteln zusammenwirken, um den Wert wenigstens eines der Verschleißangabeparameter, die durch die Messmittel bestimmt werden, mit wenigstens einem im Voraus festgelegten Referenzwert, der durch die Speichermittel gehalten wird, zu vergleichen, und
- Mittel zum Austauschen der Elektrode, die dazu ausgelegt sind, einen automatischen Austausch der erodierten Elektrode durch eine neue Elektrode vorzunehmen, wenn die Verarbeitungsmittel bestimmen, dass der Wert wenigstens eines der Verschleißangabeparameter größer oder gleich wenigstens dem im Voraus festgelegten Referenzwert ist.
